# EUROPEAN PATENT SPECIFICATION

(11) **EP 0 489 601 B1**
(45) Date of publication and mention of the grant of the patent: **05.11.1997**
(21) Application number: 91311390.8
(22) Date of filing: 06.12.1991
(51) Int. Cl.: G01N 27/36, G01N 27/414

(54) **Small glass electrode and process for preparation thereof**
Kleine Glaselektrode und Verfahren für deren Herstellung
Petite électrode en verre et procédé pour sa fabrication

(30) Priority: 06.12.1990 JP 400550/90; 05.07.1991 JP 164750/91
(43) Date of publication of application: 10.06.1992
(73) Proprietor: FUJITSU LIMITED, Kawasaki-shi, Kanagawa 211 (JP)
(72) Inventor: Suzuki, Hiroaki, c/o Fujitsu Limited, Kawasaki-shi, Kanagawa 211 (JP); Sugama, Akio, c/o Fujitsu Limited, Kawasaki-shi, Kanagawa 211 (JP); Kojima, Naomi, c/o Fujitsu Limited, Kawasaki-shi, Kanagawa 211 (JP)
(74) Representative: Silverman, Warren

(56) References cited:
- EP-A- 0 269 031
- US-A- 4 282 079
- ANALYTICAL CHEMISTRY, vol.53, no.3, March 1981, EASTON, PENS.,USA pages 552 - 554 SAVINELL ET AL. 'Miniature glass PH electrode with nonaqueous internal solution.'
- PATENT ABSTRACTS OF JAPAN vol. 8, no. 23 (P-251) 31 January 1984 & JP-A-58 180 936 (FUIGARO GIKEN KK) 22 October 1983

## Description

The present invention relates to a glass electrode and a process for the preparation thereof. More particularly, the present invention relates to a small glass electrode formed by utilizing a micro-machining technique and a process for the preparation thereof.

A glass electrode is widely and generally used as a sensor for determining the hydrogen ion (H⁺) concentration in an aqueous solution.

The determination of the H⁺ concentration is required not only in ordinary chemical experiments but also in fermentation control and in the medical field.

Furthermore, a biosensor fabricated by combining a glass electrode with either enzymes or microorganisms can be used for determining various chemical compounds.

For example, glucose reacts with dissolved oxygen and is oxidized to gluconolactone with the aid of a catalyst called glucose oxidase. If the change in the H⁺ concentration during this reaction is measured, the glucose concentration can be determined from this change. According to a similar principle, the concentration of urea in a sample can be determined.

In a glass electrode, the H⁺ concentration is measured by utilizing the electroconductivity of glass. Namely, the phenomenon is utilized that, when a glass film having a thickness of about 100 µm and an electric resistance of several hundred MΩ is placed in a solution, a voltage difference is produced according to the pH value of the solution.

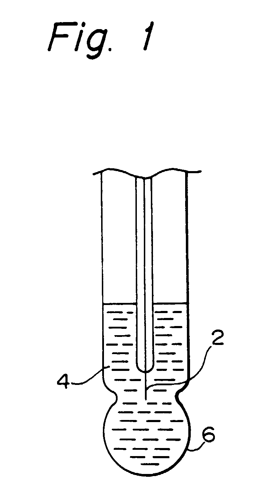

Fig. 1 of the accompanying drawings illustrates the structure of the sensing portion of a conventional glass electrode, which comprises a reference electrode 2 composed of silver/silver chloride (Ag/AgCl), an internal solution 4 such as a potassium chloride (KCl) solution having a certain concentration, and a spherical sensing glass film 6 formed at the end.

When this glass electrode is immersed in a solution containing H⁺, in response to the active quantity (ai) of H⁺, a potential is generated according to the Nernst equation:$\text{E = const + (RT/F)ℓnai}$ wherein E represents the potential of the glass electrode, R represents the gas constant, T represents the absolute temperature, and F is the Faraday constant.
Accordingly, the H⁺ concentration is determined by the above equation.

However, the commercially-available glass electrode, as shown in Fig. 1, has a size similar to that of a fountain pen, and is formed by glazing, and is therefore expensive.

An ion-sensitive electric field effect transistor (abbreviated to "ISFET") has been developed as a small H⁺ concentration sensor. Since a photolithographic technique of a semiconductor is utilized for the formation of this sensor, the size of the sensor can be reduced.

When a device, such as an ISFET, is immersed in an aqueous solution, insulation of the substrate is important.

Accordingly, many elements formed on a silicon (Si) substrate are diced into chips and a silicon nitride (Si₃N₄) film is formed on the peripheries of the chips to effect insulation, or an SOS (silicon-on-sapphire) substrate is used. Alternatively, a method is used in which a thin film transistor (TFT) is formed on a glass substrate. However, these methods mean that a rise in the price cannot be avoided and therefore, the sensor cannot be manufactured at a low price.

The conventional glass electrode formed by glazing is large in size and is expensive. An ISFET formed by the photolithography of an Si substrate requires insulation and a rise in the price is inevitable owing to the necessity of providing this insulation.

Under this background, development of another method of providing a practical glass electrode of small size and low price is desired.

EP-A-0269031 discloses a glass electrode having the features of the preamble of claim 1.

It is an object of the present invention to provide a small glass electrode capable of overcoming the foregoing problems and a process for the preparation thereof.

In accordance with a first aspect of the present invention, there is provided a glass electrode comprising:
a glass substrate having a reference electrode, a pad for external electrical connection and a lead-in line connecting the reference electrode and the pad;
a substrate having a hole therein for holding a fluid electrolyte, the substrate being bonded to the glass substrate such that the hole is located adjacent the reference electrode; and
a glass sensing film covering and sealing the hole on the surface of the substrate opposite the surface thereof bonded to the glass substrate,
characterised in that the substrate is a semiconductor substrate having a groove for injection of electrolyte in the surface thereof bounded to the glass substrate, the hole and the groove being anisotopically etched in the semiconductor substrate, and the reference electrode, pad and lead-in line being embedded in the glass substrate.

The glass film may have a multiple-layer (for example, two-layer) structure.

In accordance with a second aspect of the present invention, there is provided a process for the preparation of a glass electrode, comprising:
selectively etching a glass substrate;
forming, on the etched portion of the glass substrate, a reference electrode of silver/silver chloride and, circuit-connected to the reference electrode, a pad of gold or platinum;
subjecting a substrate face of a silicon substrate having a plane to anisotropic etching to form in the substrate face a hole for holding a fluid electrolyte and a groove for injection of electrolyte;
forming a glass sensing film on the face of the silicon substrate opposite the substrate face by partially removing a silicon oxide film left on that face such that the hole is covered and sealed with a silicon oxide film and converting the silicon oxide film to a glass film; and
bonding together the etched surface of the glass substrate and the substrate face of the silicon substrate such that the hole is located adjacent the reference electrode.

In accordance with a third aspect of the present invention, there is provided a process for the preparation of a glass electrode, which comprises:
selectively etching a glass substrate;
forming, on the etched portion of the glass substrate, a reference electrode of silver/silver chloride and, circuit-connected to the reference electrode, a pad of gold or platinum;
subjecting a substrate face of a silicon substrate having a plane to anisotropic etching to form in the substrate face a hole for holding a fluid electrolyte and a groove for injection of electrolyte;
removing a silicon oxide film left on the silicon substrate after etching;
forming a glass sensing film on the face of the silicon substrate opposite the substrate face to cover and seal the hole, and
bonding together the etched surface of the glass substrate and the substrate face of the silicon substrate such that the hole is located adjacent the reference electrode.

The process of the second and third aspects of the present invention may further comprise a step of injecting the electrolyte into the hole from the injecting groove according to need. Accordingly, a small glass electrode having an electrolyte injected in the hole is included within the scope of the present invention. The present invention enables a glass electrode having a small size to be provided.

For a better understanding of the invention, and to show how the same may be carried into effect, reference will now be made, by way of example only, to the accompanying drawings, in which:
Fig. 1 is a sectional view illustrating a conventional glass electrode;
Fig. 2(A) is a plan view showing a glass substrate of a glass electrode according to one embodiment of the present invention, Fig. 2(B) is a plan view showing an Si substrate of the glass electrode of this embodiment, and Fig. 2(C) is a plan view showing the glass substrate and Si substrate shown in Figs. 2(A) and 2(B) bonded together to form a glass electrode;
Fig. 3(A) is a sectional view taken along line X-X' of Fig. 2(C), and Fig. 3(B) is a sectional view showing a modification of the glass electrode according to the present invention;
Figs. 4(A)-(F) are diagrams illustrating steps in the production of a glass electrode according to one embodiment of the present invention;
Fig. 5(A) is a plan view showing a glass substrate of a glass electrode according to another embodiment of the present invention, Fig. 5(B) is a plan view showing an Si substrate of the glass electrode of this embodiment, and Fig. 5(C) is a plan view showing the glass substrate and Si substrate shown in Figs. 5(A) and 5(B) bonded together to form a glass electrode;
Fig. 6 is a sectional view taken along line X-X' of Fig. 5(C) ;
Figs. 7(A)-(F) are diagrams illustrating steps in the production of a glass electrode according to another embodiment of the present invention;
Fig. 8(A) is a plan view showing a glass substrate of a glass electrode according to still another embodiment of the present invention, Fig. 8(B) is a plan view showing an Si substrate of the glass electrode of this embodiment, and Fig. 8(C) is a plan view showing the glass substrate and Si substrate shown in Figs. 8(A) and 8(B) bonded together to form a glass electrode;
Fig. 9 is a sectional view taken along line X-X' of Fig. 8(C);
Figs. 10(A)-(F) are diagrams illustrating steps in the production of a glass electrode according to still another embodiment of the present invention;
Fig. 11 is a graph illustrating a response curve of a glass electrode in accordance with the present invention; and
Fig. 12 is a graph illustrating the relationship between the change of the H⁺ concentration and the change of the electrode potential in a glass electrode in accordance with the present invention.

The present inventors have already succeeded in providing a practically utilizable small Clark oxygen electrode by applying the micro-machining technique to an Si substrate (US-A-4975175).

This small oxygen electrode is often used in relation to medical treatment. In this case, the oxygen concentration is measured relative to the H⁺ concentration, rather than the oxygen concentration alone.

Accordingly, the practical utilization of the micro-machining technique to produce a small glass electrode was tried.

The following plan describes this utilization by the present inventors:
(1) The size of the glass electrode now used as the H⁺ concentration sensor and found to operate well, is reduced.
(2) At least one holding hole formed by anisotropic etching of an Si substrate is used as a vessel for storing an electrolyte.
(3) A glass film formed by heat oxidation or sputtering is used as a sensing film (sensing element) responding to the H⁺ concentration.
(4) A reference electrode is formed on a glass substrate, and the glass substrate and Si substrate are bonded and integrated by the anodic bonding method.
(5) A reference electrode composed of Ag/AgCl, a lead-in line and a pad are embedded in the glass substrate.

The glass substrate to be bonded to the Si substrate is required to adhere tightly to the Si substrate not only in the course of cooling from the anode bonding treatment temperature, i.e. about 250°C, to normal temperature but also in the atmosphere in which it is to be used. For this purpose, it is required that the glass substrate should (1) have a thermal expansion coefficient approximate to that of Si, (2) be composed of a glass having a low softening point, and (3) have a high resistance to thermal stress. In view of the foregoing, Pyrex glass or lead glass is preferably used. This glass alone can be used as the substrate, or this glass can be used in a state bonded to other glass substrates or Si substrates.

Under this background, a glass electrode is formed by using the micro-machining technique according to the present invention.

In one embodiment of the present invention, a thin glass film acting as the sensing film is formed by utilizing at least a part of an SiO₂ film obtained by wet oxidation of an Si wafer.

However, when a sensing film having an increased strength is desired, the sensing film is formed by bonding a glass film to be Si substrate.

The thickness of the SiO₂ film formed by wet oxidation of the silicon wafer is about 1 µm at most, and it is impossible to increase the film thickness. Accordingly, when a film with an increased strength is required, a glass substrate is first etched to form a glass film having a desired thickness, the silicon oxide film left on the surface of the silicon substrate is removed, and then, the glass film is bonded to the bottom portion of the holding hole.

In this embodiment of the present invention, the strength of the glass film acting as the sensing film is increased. Therefore, the yield is improved and the glass electrode can be used without breaking.

In the glass electrodes of the present invention, the sensitivity to H⁺ concentration is in practice sufficiently high. However, when a glass electrode having a further enhanced sensitivity is desired, a glass electrode having a structure described below can be adopted.

The voltage generated at the glass electrode is generally represented by the following Nernst equation:$\text{E = constant - 0.059pH}$ However, this equation is a theoretical formula, and it is not easy to construct the glass electrode so that the potential in accordance with this equation is obtained.

When a sensing film is formed by using Pyrex glass having a thickness of about 50 µm, the gradient coefficient -0.059 (-59 mV) of the Nernst equation is about -0.03 (-30 mV).

Therefore, in accordance with certain embodiments of the present invention, the glass material is improved.

Lithium (Li) glass, sodium-calcium (Na-Ca) glass and the like are known as glass for a glass electrode. However, in view of their heat resistance and strength, these materials cannot be used as the sensing film for a small glass electrode. The reasons are as follows.
(1) A heat treatment at about 800°C is necessary for bonding to the Si substrate, and the heat resistance of these glass materials is insufficient.
(2) A considerable strain is left after heat bonding, but the glass materials cannot resist this strain.

According to one embodiment of the present invention, a double-layer film obtained by forming a film of a glass having excellent characteristics, such as a lithium glass or a sodium-calcium glass, by sputtering or vacuum deposition on a film of a glass insufficient in characteristics required for the sensing film, such as a Pyrex glass, is used as the sensing film, whereby a glass electrode satisfying substantially the requirement of the Nernst equation can be obtained.

In the present invention, it is sufficient if at least one holding hole is formed. However, if a plurality of holding holes are formed and glass films are bonded thereto, the risk of breaking the glass film is effectively reduced.

In the process of the present invention, bonding of the glass substrate and the silicon substrate is accomplished, for example, by a method of heating and bonding both substrates, a method using an adhesive or an anodic bonding method. From a practical viewpoint, the anode bonding method is preferably adopted.

The present invention will now be described in detail with reference to the following examples that by no means limit the scope of the invention.

### Example 1

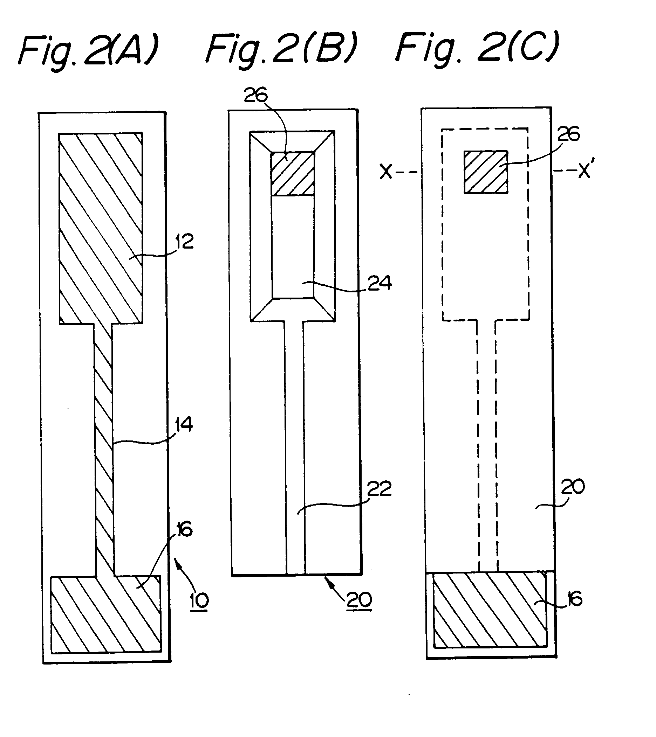

Fig. 2(A) is a plan view showing a glass substrate 10 of a glass electrode according to one embodiment of the present invention, Fig. 2(B) is a plan view showing an Si substrate 20 of the glass electrode according to this embodiment, and Fig. 2(C) is a plan view showing the complete glass electrode of this embodiment of the present invention, formed by reversing the glass substrate onto the Si substrate 20 and bonding the respective substrates together.

A reference electrode 12 composed of Ag/AgCl, a lead-in line 14 composed of Au and a pad 16 composed of Au are embedded in the glass substrate 10.

The substrate face of the Si substrate 20 is the (100) plane. The Si substrate 20 is subjected to anisotropic etching, whereby a groove 22 for injecting an electrolyte, an electrolyte-holding hole 24 and a glass film 26 acting as the sensing film on at least a part of the hole 24 are formed. Incidentally, the groove only can also be made by a separate anisotropic etching operation.

In Fig. 2(C), the broken line indicates the interior of the glass electrode, the pad 16 and glass film 26 being visible on the side of the Si substrate 20.

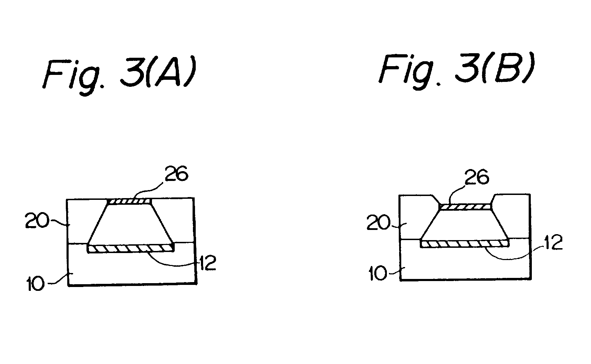

Fig. 3(A) is a view showing a section taken along the line X-X' in Fig. 2(C). As is seen from Fig. 3(A), the glass sensing film 26 is formed in the bottom portion of the etched Si substrate 20, i.e. the surface of the Si substrate 20 which is opposite the surface which is bonded to the glass substrate 10.

Fig. 3(B) is a sectional view showing a modification of the electrode of Example 1, in which the Si substrate is also etched from the bottom surface, so that the sensing film 26 is formed slightly on the inner side of the Si substrate.

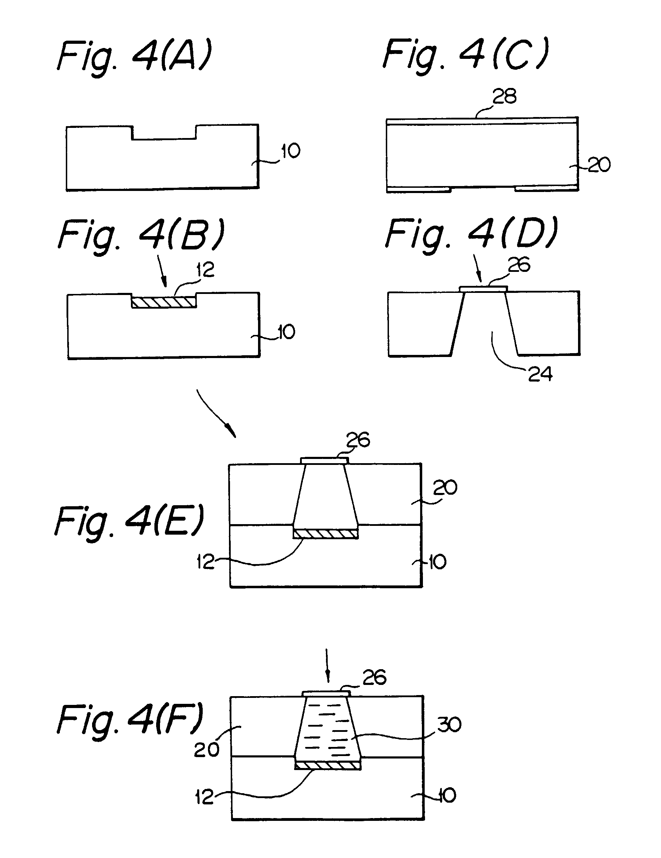

Fig. 4 illustrates the steps of one method for preparing a glass electrode in accordance with the present invention. One embodiment of the preparation process will now be described with reference to Fig. 2 and Fig. 4.

### Formation of Glass Substrate:

A negative photoresist is spin-coated on the surface of a Pyrex glass substrate (Iwaki 7740) having a diameter of 5.08 cm (2 inches) and a thickness of 500 µm and is heated and dried at 150°C for 30 minutes. Regions for the formation of a plurality of reference electrodes 12, lead-in lines 14 and pads 16 are windowed and exposed by photolithography, and the same resist is similarly coated and dried on the back surface.

Then, the glass substrate is immersed in a mixed solution comprising 50% hydrofluoric acid (HF), concentrated nitric acid (HNO₃) and ammonium fluoride [(NH₄)F] at a ratio of 1/1/8 for 80 minutes to etch the glass substrate in a depth of 3 µm. Then, the resist is peeled by using a mixed solution comprising sulphuric acid (H₂SO₄) and hydrogen peroxide (H₂O₂) at a ratio of 2/1 [see Fig. 4(A)].

Then, the glass substrate 10 is sufficiently washed with a mixed solution of H₂O₂ and ammonia (NH₄OH) and pure water, and is then dried.

Then, an Au film is vacuum-deposited on the glass substrate 10. Since Au adheres very poorly to glass, a very thin chromium (Cr) film is vacuum-deposited on the glass substrate in advance to improve adhesiveness.

The thickness of the Cr film is 40 nm (400 Å) and the thickness of the Au film is 400 nm (4000 Å).

Then, a positive resist film (DFRP-5000 supplied by Tokyo Oka) is spin-coated on the regions for forming reference electrodes 12, lead-in lines 14 and pads 16 by photolithography. Then, the Au film and Cr film are selectively etched to form a reference electrode pattern comprising reference electrodes 12, lead-in lines 14 and pads 16.

The Au-etching solution is formed by dissolving 4 g of KI and 1 g of I₂ in 40 ml of water, and the Cr-etching solution is formed by dissolving 0.5 g of NaOH and 1 g of K₃Fe(CN)₆ in 4 ml of water.

Then, silver (Ag) is vacuum-deposited on the portion for forming the reference electrode 12 and, in the same manner as described above, coating of a positive resist, heat-drying, light exposure and development are carried out to coat the resist only on the reference electrode-forming portion. Then, Ag etching is conducted and the resist is dissolved and removed, whereby a silver film is formed on the reference electrode-forming portion.

The Ag-etching solution comprises 29% NH₄OH, 31% H₂O₂ and pure water at a ratio of 1/1/20.

Then, the entire substrate is sufficiently washed with pure water and immersed in a 0.1 M solution of FeCl₃ for 10 minutes to form a thin AgCl layer on the surface of the Ag.

Then, the entire substrate is sufficiently washed with pure water to complete reference electrodes 12, lead-in lines 14 and pads 16 [Fig. 4(B)].

### Formation of Si Substrate:

An Si substrate 20 having a (100) plane as the substrate face and having a thickness of 350 µm and a diameter of 5.08 cm (2 inches) is prepared, sufficiently washed with a mixed solution of H₂O₂ and NH₄OH and pure water, and dried. The Si substrate 20 is subjected to wet oxidation at 1050°C for 200 minutes to form an SiO₂ film 28 having a thickness of 1 µm on the entire surface thereof.

A negative resist (0MR-83 supplied by Tokyo Oka) having a viscosity of 60 cP is coated on the surface of the Si substrate, and light exposure, development and rinsing are carried out to form a resist pattern on the substrate. Then, the Si substrate 20 is immersed in a mixed solution comprising 50% HF and 40% NH₄F at a ratio of 1/6 and the exposed portion of SiO₂ is etched and removed to form a holding hole [see Fig. 4(C)] in the SiO₂.

Then, the resist film is peeled in a mixed solution comprising sulphuric acid and hydrogen peroxide at a ratio of 2/1. Then, the Si substrate 20 is immersed in 35% KOH at 80°C and anisotropic etching of silicon is carried out. This forms an electrolyte-holding hole 24 in the reference electrode portion at the position of the holding hole.

A glass film 26 acting as the sensing film is formed in the bottom portion of the holding hole 24 by utilizing an SiO₂ film 28 having a thickness of 1 µm, formed by wet oxidation.

If the SiO₂ used as the mask is left on the surface of the Si substrate 20, a higher temperature is necessary for the anodic bonding. Therefore, SiO₂ other than the glass film 26 is completely removed by photolithography using a mixed solution comprising 50% HF and 40% NH₄F at a ratio of 1/6. Thus, a vessel portion for storing an electrolyte is completed [see Fig. 4(D)].

### Bonding of Glass Substrate and Si Substrate:

The thus-prepared glass substrate 10 and Si substrate 20 are immersed in pure water, sufficiently washed under ultrasonic vibrations and dried. Both substrates are bonded and a voltage of 1200 V is applied at a temperature of 250°C between the substrates, so that the Si substrate 20 is located on the positive side and the glass substrate 10 is located on the negative side, whereby anodic bonding of the glass substrate and the silicon substrate is effected [see Fig. 4(E)].

The plurality of glass electrode elements formed on the substrate are cut out into chips by using a dicing saw to obtain a plurality of small glass electrodes.

When a small glass electrode obtained in this way is used, an electrolyte is introduced into the interior of the electrode according to the following method.

A beaker is charged with 0.1 M hydrochloric acid aqueous solution or an aqueous potassium chloride buffer solution containing a phosphoric acid (electrolyte). The glass electrode is entirely immersed in the electrolyte and the entire system including the beaker is placed in a sealed vessel. Then, deaeration of the sealed vessel is carried out by means of a vacuum pump.

After bubbles have ceased to come out of the hole 22 for injecting the electrolyte 30, air is introduced into the vessel. The hole 22 can be filled with an epoxy resin.

By the above operation, the electrolyte 30 is introduced into the inner space of the electrode, whereby a small glass electrode is obtained [see Fig. 4(F)].

According to this embodiment, a fine glass electrode can be prepared by using the micro-machining technique while maintaining a wafer-like shape. Accordingly, reduction of the cost is possible.

Furthermore, since the glass electrode can be stored in a dry state, storage over a long period is possible.

### Example 2

Another embodiment of the process for preparing a glass electrode in accordance with the present invention will now be described.

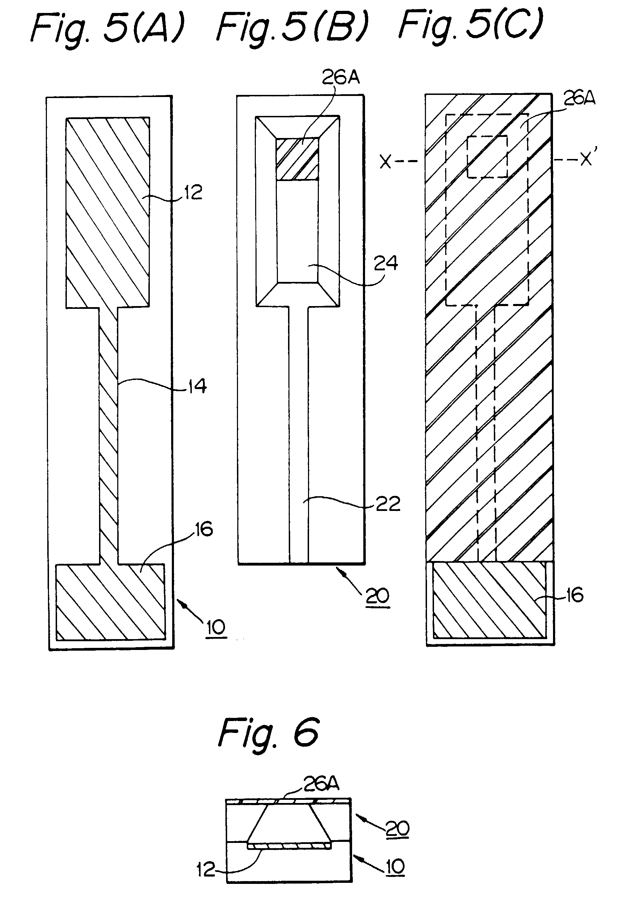

Fig. 5(A) is a plan view showing a glass substrate of the glass electrode according to this embodiment of the present invention, Fig. 5(B) is a plane view showing an Si substrate of the glass electrode according to this embodiment, and Fig. 5(C) is a plane view showing the glass electrode formed by bonding together the glass substrate and Si substrate shown in Figs. 5(A) and 5(B).

Fig. 6 is a diagram illustrating the section taken along line X-X' in Fig. 5(C).

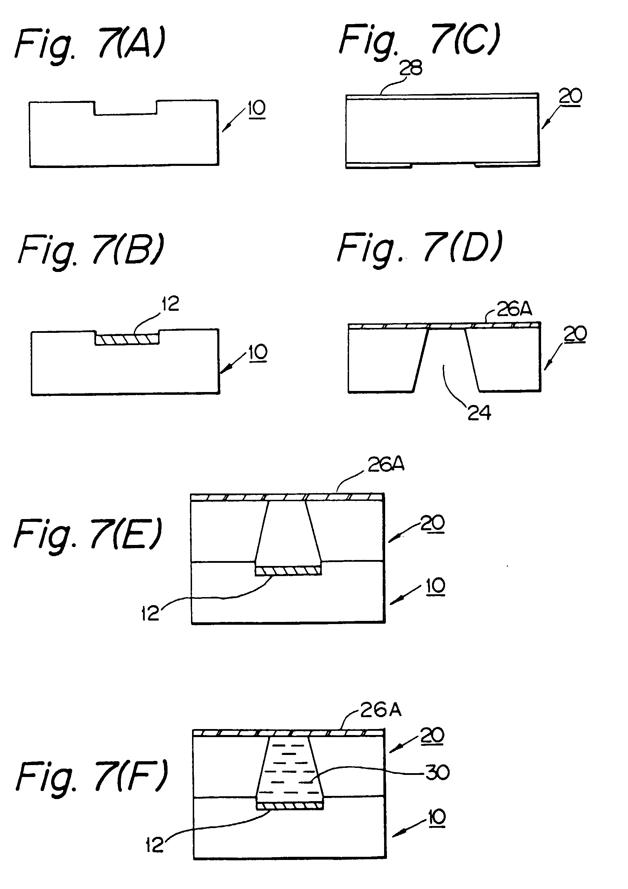

Fig. 7 is a diagram illustrating steps of forming the glass electrode according to this embodiment of the present invention.

In Figs. 5 to 7, reference numerals represent the same members as in Figs. 1 to 4 unless otherwise indicated.

The manner in which the glass substrate is formed is the same as that described in Example 1. Accordingly, the description of this is omitted.

Furthermore, the Si substrate is prepared substantially in the same manner as described in Example 1, except that a part of the SiO₂ film is not utilized as the glass film acting as the sensing film, the SiO₂ film being entirely removed.

### Bonding of Glass Film to Si Substrate:

A Pyrex glass film (Iwaki 7740) is etched in a mixed solution comprising 50% HF and concentrated HNO₃ at a ratio of 2/1 to obtain a film having a thickness of about 50 µm, and the film is sufficiently washed to obtain a glass film 26A acting as the sensing film.

The glass film 26A is placed on the surface of the Si substrate 20 (formed by perforating the Si substrate by anisotropic etching) and heated at 800°C to effect bonding [see Fig. 7(D)].

Bonding of the thus-prepared glass substrate and Si substrate [Fig. 7(E)] and injection of the electrolyte [Fig. 7(F)] are carried out in the same manner as described in Example 1.

According to this embodiment of the present invention, the strength of the glass film of the formed glass electrode is increased and hence the yield is increased. The glass electrode is advantageous over the conventional glass electrode in that it is less prone to breaking during use.

### Example 3

A further embodiment of the process for preparing a glass electrode in accordance with the present invention will now be described.

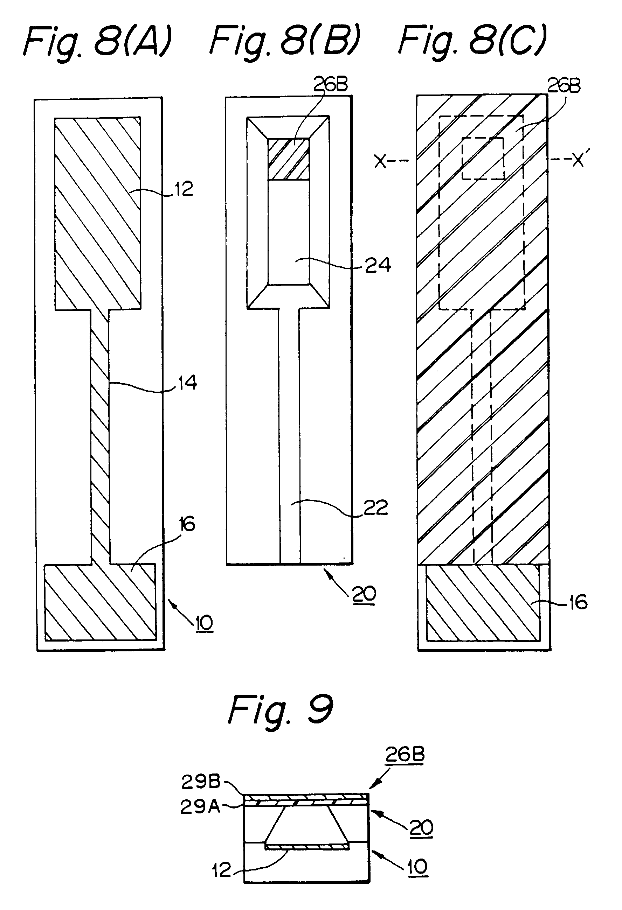

Fig. 8(A) is a plane view showing a glass substrate of the glass electrode according to this embodiment of the present invention, Fig. 8(B) is a plane view showing an Si substrate of the glass electrode according to this embodiment, and Fig. 8(C) is a plane view showing the glass electrode formed by bonding together the glass substrate and Si substrate shown in Figs. 8(A) and 8(B).

Fig. 9 is a diagram illustrating the section taken along the line X-X' in Fig. 8(C).

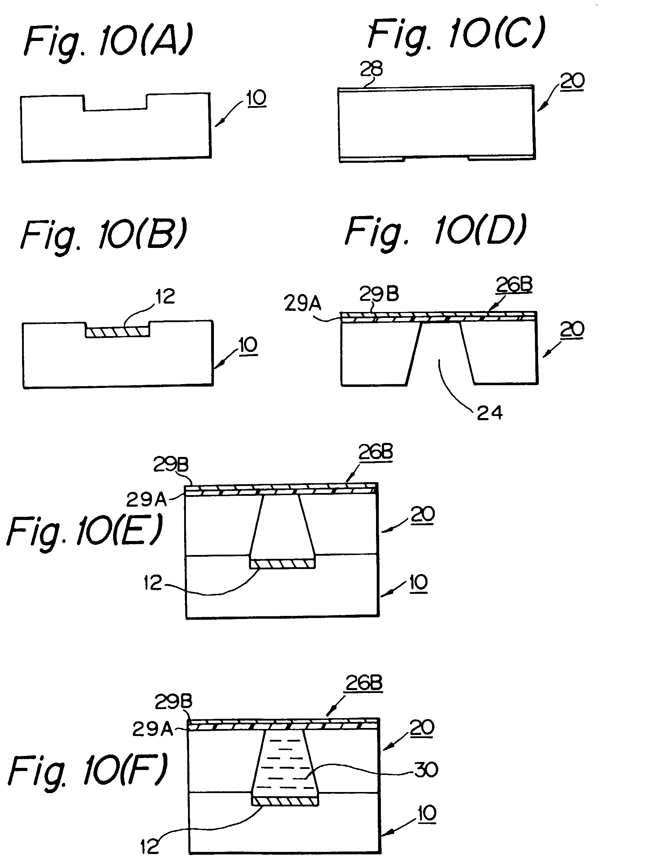

Fig. 10 is a diagram illustrating steps of forming the glass electrode according to this embodiment of the present invention.

In Figs. 8 to 10, reference numerals represent the same members as in Figs. 1 to 4, unless otherwise indicated.

The manner in which the glass substrate is formed is the same as described in Example 1. Accordingly, the description of this is omitted.

Furthermore, the Si substrate is prepared substantially in the same manner as described in Example 1, except that a part of the SiO₂ film is not utilized as the glass film acting as the sensing film, the SiO₂ film being entirely removed.

### Bonding of Glass Film to Si substrate:

A Pyrex glass film (Iwaki 7740) is etched in a mixed solution comprising 50% HF and concentrated HNO₃ at a ratio of 2/1 to obtain a film having a thickness of, for example, 20-150 µm, in this case 50 µm, and the film is sufficiently washed to obtain a first glass film 29A constituting a film acting as the sensing film.

The first glass film 29A is placed on the back surface of an Si substrate 20 having a perforated or piercing holding hole 24, formed by anisotropic etching of an Si substrate, and heated at 750°C to effect bonding of the first glass film 29A to the Si substrate 20. Then, the Si substrate having the first glass film 29A formed thereon is set in a sputtering device and a sodium-calcium Na-Ca glass is sputtered to a thickness of 500 nm to form a second glass film 29B on the first glass film 29A, whereby a glass film 26B acting as the sensing film is obtained [see Fig. 10(D)].

Bonding of the thus-prepared glass substrate and Si substrate [Fig. 10(E)] and injection of an electrolyte [Fig. 10(F)] are carried out in the same manner as described in Example 1, whereby a small glass electrode is obtained.

The characteristics of the small glass electrode obtained in Example 3 are evaluated according to the following method.

The evaluation is performed by monitoring changes of the potential of the glass electrode relative to the potential of an external reference electrode of silver/silver chloride by using an electrometer. For examining changes of the potential relative to changes of the pH value, the sensing portion of the electrode is immersed in a 10 mM TRIS (Trimethyl aminomethane) solution, and HCl is added to reduce the pH value. At each pH value, the potential of the glass electrode is examined. The experiment is conducted at 25°C.

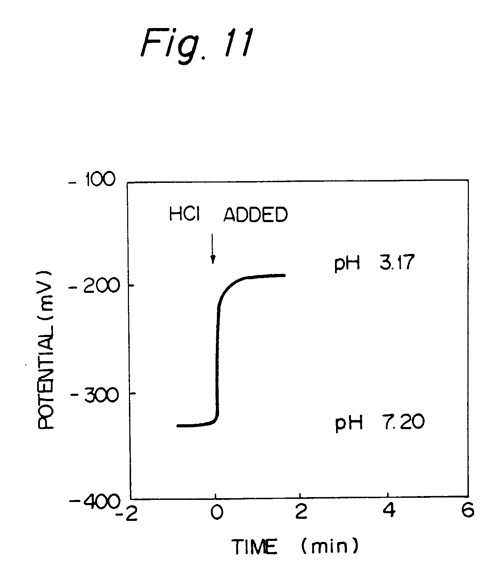

The response curve obtained when the pH value of the external buffer solution is changed is shown in Fig. 11.

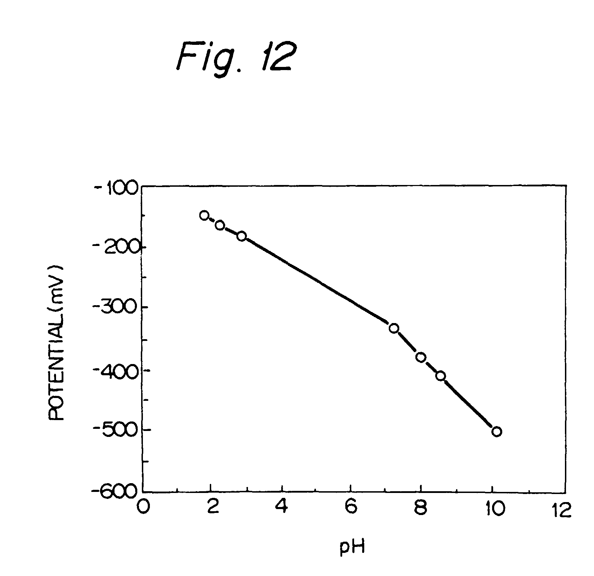

As is seen from Fig. 11, a very clear response curve is obtained. When the pH value is changed, the small glass electrode immediately shows a change and the 90% response time is 10 seconds. The change in the electrode potential observed when the pH value is changed is shown in Fig. 12. It can be seen that a linear relation is established between the electrode potential and the pH over a broad pH value range of from 2 to 10. The gradient of the linear relation is a value approximate to -59 mV/pH of the theoretical value of the Nernst equation at 25°C.

## Claims

1. A glass electrode comprising:
a glass substrate (10) having a reference electrode (12), a pad (16) for external electrical connection and a lead-in line (14) connecting the reference electrode (12) and the pad (16);
a substrate (20) having a hole (24) therein for holding a fluid electrolyte, the substrate (20) being bonded to the glass substrate (10) such that the hole (24) is located adjacent the reference electrode (12); and
a glass sensing film (26;26A;26B) covering and sealing the hole (24) on the surface of the substrate (20) opposite the surface thereof bonded to the glass substrate (10),
characterised in that the substrate (20) is a semiconductor substrate having a groove for injection of electrolyte in the surface thereof bounded to the glass substrate (10), the hole (24) and the groove (22) being anisotopically etched in the semiconductor substrate (20), and the reference electrode (12), pad (16) and lead-in line (14) being embedded in the glass substrate (10).

2. A glass electrode as claimed in claim 1, wherein the glass film (26B) comprises two layers (29A,29B) of glass.

3. A glass electrode as claimed in claim 1 or claim 2, wherein the semiconductor substrate (20) is a (100) oriented silicon substrate, the surface thereof bonded to the glass substrate (10).

4. A glass electrode as claimed in claim 1, 2 or 3, wherein the reference electrode (12) is of silver or silver/silver chloride.

5. A glass electrode as claimed in any one of claims 1 to 4, wherein the pad (14) and the lead-in line (16) are of gold or platinum.

6. A glass electrode as claimed in any preceding claim, further comprising an electrolyte injected into the electrolyte-holding hole (24) from the groove (22).

7. A glass electrode as claimed in claim 6, wherein the electrolyte is an aqueous electrolyte solution.

8. A glass electrode as claimed in claim 6 or claim 7, wherein the electrolyte is porous or sol-like material containing an aqueous electrolyte solution.

9. A process for the preparation of a glass electrode, comprising:
selectively etching a glass substrate (10);
forming, on the etched portion of the glass substrate (10), a reference electrode (12) of silver/silver chloride and, circuit-connected to the reference electrode (12), a pad (14) of gold or platinum;
subjecting a silicon substrate (20) having a (100) plane as the substrate face to anisotropic etching to form in the substrate face a hole (24) for holding a fluid electrolyte and a groove (22) for injection of electrolyte;
forming a glass sensing film (26) on the face of the silicon substrate (20) opposite the substrate face by partially removing a silicon oxide film left on that face such that the hole (24) is covered and sealed with a silicon oxide film and converting the silicon oxide film to a glass film; and
bonding together the etched surface of the glass substrate (10) and the substrate face of the silicon substrate (20) such that the hole (24) is located adjacent the reference electrode (12).

10. A process for the preparation of a glass electrode, which comprises:
selectively etching a glass substrate (10);
forming, on the etched portion of the glass substrate (10), a reference electrode (12) of silver/silver chloride and, circuit-connected to the reference electrode (12), a pad (14) of gold or platinum;
subjecting a silicon substrate (20) having a (100) plane as the substrate face to anisotropic etching to form in the substrate face a hole (24) for holding a fluid electrolyte and a groove (22) for injection of electrolyte;
removing a silicon oxide film left on the silicon substrate (20) after etching;
forming a glass sensing film (26A;26B) on the face of the silicon substrate (20) opposite the substrate face to cover and seal the hole (24), and
bonding together the etched surface of the glass substrate (10) and the substrate face of the silicon substrate (20) such that the hole (24) is located adjacent the reference electrode (12).

11. A process as claimed in claim 10, wherein the glass sensing film (26A) is formed by bonding a glass film on the face of the silicon substrate (20) opposite the substrate face.

12. A process as claimed in claim 10, wherein the glass sensing film (26B) is formed by bonding a lower glass layer (29A) on the face of the silicon substrate (20) opposite the substrate face and then forming, on the lower glass layer (29A), an upper glass layer (29B) made of sodium-calcium (Na-Ca) glass or lithium (Li) glass by sputtering or vacuum deposition.

13. A process as claimed in any one of claims 9 to 12, wherein the glass substrate (10) is bonded to the silicon substrate (20) by anodic bonding.

14. A process as claimed in any one of claims 9 to 13, further comprising injecting an electrolyte into the hole (24) via the groove (22).

## Patentansprüche

1. Glaselektrode mit:
einem Glassubstrat (10), das eine Referenzelektrode (12), eine Anschlußinsel (16) zur externen elektrischen Verbindung und eine Anschlußleitung (14) hat, die die Referenzelektrode (12) und die Anschlußinsel (16) verbindet;
einem Substrat (20), das ein Loch (24) in sich hat, zum Aufnehmen eines Flüssigelektrolyts, welches Substrat (20) so auf das Glassubstrat (10) geklebt ist, daß das Loch (24) angrenzend an die Referenzelektrode (12) angeordnet ist; und
einem Glassensorfilm (26; 26A; 26B), der das Loch (24) auf der Oberfläche des Substrats (20) bedeckt und verschließt, die der Oberfläche von ihm gegenüberliegt, die auf das Glassubstrat (10) geklebt ist,
dadurch gekennzeichnet, daß das Substrat (20) ein Halbleitersubstrat ist, das eine Nut zum Injizieren von Elektrolyt in seiner Oberfläche hat, die auf das Glassubstrat (10) geklebt ist, welches Loch (24) und welche Nut (22) in dem Halbleitersubstrat (20) anisotrop geätzt sind und welche Referenzelektrode (12), Anschlußinsel (16) und Anschlußleitung (14) in dem Glassubstrat (10) eingebettet sind.

2. Glaselektrode nach Anspruch 1, bei der der Glasfilm (26B) zwei Schichten (29A, 29B) von Glas umfaßt.

3. Glaselektrode nach Anspruch 1 oder Anspruch 2, bei der das Halbleitersubstrat (20) ein (100)-orientiertes Siliciumsubstrat ist, dessen Oberfläche auf das Glassubstrat (10) geklebt ist.

4. Glaselektrode nach Anspruch 1, 2 oder 3, bei der die Referenzelektrode (12) aus Silber oder Silber/Silberchlorid ist.

5. Glaselektrode nach irgendeinem der Ansprüche 1 bis 4, bei der die Anschlußinsel (14) und die Anschlußleitung (16) aus Gold oder Platin sind.

6. Glaselektrode nach irgendeinem vorhergehenden Anspruch, ferner mit einem Elektrolyt, der von der Nut (22) aus in das Elektrolytaufnahmeloch (24) injiziert ist.

7. Glaselektrode nach Anspruch 6, bei der der Elektrolyt eine wäßrige Elektrolytlösung ist.

8. Glaselektrode nach Anspruch 6 oder Anspruch 7, bei der der Elektrolyt poröses oder solartiges Material ist, das eine wäßrige Elektrolytlösung enthält.

9. Prozeß für die Herstellung einer Glaselektrode, der umfaßt:
selektives Ätzen eines Glassubstrats (10);
Bilden, auf dem geätzten Abschnitt des Glassubstrats (10), einer Referenzelektrode (12) aus Silber/Silberchlorid und, schaltungsverbunden mit der Referenzelektrode (12), einer Anschlußinsel (14) aus Gold oder Platin;
Unterziehen eines Siliciumsubstrats (20), das eine (100)-Ebene als Substratfläche hat, dem anisotropen Ätzen, um in der Substratfläche ein Loch (24) zum Aufnehmen eines Flüssigelektrolyts und eine Nut (22) zum Injizieren von Elektrolyt zu bilden;
Bilden eines Glassensorfilms (26) auf der Fläche des Siliciumsubstrats (20), die der Substratfläche gegenüberliegt, durch teilweises Entfernen eines Siliciumoxidfilms, der auf jener Fläche verblieben ist, so daß das Loch (24) mit einem Siliciumoxidfilm bedeckt und verschlossen ist, und Konvertieren des Siliciumoxidfilms in einen Glasfilm; und
Zusammenkleben der geätzten Oberfläche des Glassubstrats (10) und der Substratfläche des Siliciumsubstrats (20) derart, daß das Loch (24) angrenzend an die Referenzelektrode (12) angeordnet ist.

10. Prozeß für die Herstellung einer Glaselektrode, der umfaßt:
selektives Ätzen eines Glassubstrats (10);
Bilden, auf dem geätzten Abschnitt des Glassubstrats (10), einer Referenzelektrode (12) aus Silber/ Silberchlorid und, schaltungsverbunden mit der Referenzelektrode (12), einer Anschlußinsel (14) aus Gold oder Platin;
Unterziehen eines Siliciumsubstrats (20), das eine (100)-Ebene als Substratfläche hat, dem anisotropen Ätzen, um in der Substratfläche ein Loch (24) zum Aufnehmen eines Flüssigelektrolyts und eine Nut (22) zum Injizieren von Elektrolyt zu bilden;
Entfernen eines Siliciumoxidfilms, der nach dem Ätzen auf dem Siliciumsubstrat (20) verblieben ist;
Bilden eines Glassensorfilms (26A; 26B) auf der Fläche des Siliciumsubstrats (20), die der Substratfläche gegenüberliegt, um das Loch (24) zu bedecken und zu verschließen; und
Zusammenkleben der geätzten Oberfläche des Glassubstrats (10) und der Substratfläche des Siliciumsubstrats (20) derart, daß das Loch (24) angrenzend an die Referenzelektrode (12) angeordnet ist.

11. Prozeß nach Anspruch 10, bei dem der Glassensorfilm (26A) durch Kleben eines Glasfilms auf die Fläche des Siliciumsubstrats (20) gebildet wird, die der Substratfläche gegenüberliegt.

12. Prozeß nach Anspruch 10, bei dem der Glassensorfilm (26B) gebildet wird, indem eine untere Glasschicht (29A) auf die Fläche des Siliciumsubstrats (20) geklebt wird, die der Substratfläche gegenüberliegt, und dann, auf der unteren Glasschicht (29A), eine obere Glasschicht (29B) aus Natrium-Calcium-(Na-Ca)-Glas oder Lithium-(Li)-Glas durch Sputtern oder Vakuumabscheidung gebildet wird.

13. Prozeß nach irgendeinem der Ansprüche 9 bis 12, bei dem das Glassubstrat (10) durch anodisches Kleben auf das Siliciumsubstrat (20) geklebt wird.

14. Prozeß nach irgendeinem der Ansprüche 9 bis 13, der ferner das Injizieren eines Elektrolyts durch die Nut (22) in das Loch (24) umfaßt.

## Revendications

1. Électrode de verre comportant :
un substrat de verre (10) possédant une électrode de référence (12), un plot (16) en vue d'une connexion électrique extérieure et un fil d'introduction (14) reliant l'électrode de référence (12) et le plot (16);
un substrat (20) possédant un trou (24) pour contenir un électrolyte fluide, le substrat (20) étant relié au substrat de verre (10) de telle sorte que le trou (24) soit situé à proximité de l'électrode de référence (12); et
une pellicule de détection en verre (26; 26A; 26B) recouvrant et fermant le trou (24) sur la surface du substrat (20) opposée à la surface de celui-ci liée au substrat de verre (10),
caractérisée en ce que le substrat (2) est un substrat semiconducteur possédant une gorge pour une injection d'électrolyte dans la surface de celui-ci liée au substrat de verre (10), le trou (24) et la gorge (22) étant gravés de façon anisotrope dans le substrat semiconducteur (20), et l'électrode de référence (12), le plot (16) et le fil d'introduction (14) étant noyés dans le substrat de verre (10).

2. Électrode de verre selon la revendication 1, dans laquelle la pellicule de verre (26B) comporte deux couches (29A, 29B) de verre.

3. Électrode de verre selon la revendication 1 ou la revendication 2, dans laquelle le substrat semiconducteur (20) est un substrat de silicium orienté (100) la surface de celui-ci étant liée au substrat de verre (10).

4. Électrode de verre selon la revendication 1, 2 ou 3, dans laquelle l'électrode de référence (12) est en argent ou en argent/chlorure d'argent.

5. Électrode de verre selon l'une quelconque des revendications 1 à 4, dans laquelle le plot (16) et le fil d'introduction (14) sont en or ou en platine.

6. Électrode de verre selon l'une quelconque des revendications précédentes, comportant en outre un électrolyte injecté dans le trou de réception d'électrolyte (24) depuis la gorge (22).

7. Électrode de verre selon la revendication 6, dans laquelle l'électrolyte est une solution d'électrolyte aqueuse.

8. Électrode de verre selon la revendication 6 ou la revendication 7, dans laquelle l'électrolyte est un matériau poreux ou sous forme de sol contenant une solution aqueuse d'électrolyte.

9. Procédé de fabrication d'une électrode en verre comportant les étapes consistant à :
graver sélectivement un substrat de verre (10);
former, sur la partie gravée du substrat de verre (10), une électrode de référence (12) d'argent/chlorure d'argent, et relié à l'électrode de référence (12), un plot (14) d'or ou de platine;
soumettre un substrat de silicium (20) ayant un plan (100) en tant que face de substrat à une gravure anisotrope pour former dans la face du substrat un trou (24) en vue de contenir un électrolyte fluide et une gorge (22) en vue d'une injection de l'électrolyte;
former une pellicule de détection en verre (26) sur la face du substrat de silicium (20) opposée à la face du substrat en éliminant partiellement une pellicule d'oxyde de silicium laissée sur cette face de telle sorte que le trou (24) soit recouverte et fermé par une pellicule d'oxyde de silicium et convertir la pellicule d'oxyde de silicium en une pellicule de verre; et
solidariser la surface gravée du substrat de verre (10) et la face du substrat de silicium (20) de telle sorte que le trou (24) soit situé à proximité de l'électrode de référence (12).

10. Procédé de fabrication d'une électrode de verre, comportant les étapes consistant à :
graver sélectivement un substrat de verre (10);
former, sur la partie gravée du substrat de verre (10), une électrode de référence (12) d'argent/chlorure d'argent, et relié à l'électrode de référence (12), un plot (16) d'or ou de platine;
soumettre un substrat de silicium (20) ayant un plan (10) en tant que face de substrat, à une gravure anisotrope pour former dans la face du substrat un trou (24) en vue de contenir un électrolyte fluide et une gorge (22) en vue de l'injection d'un électrolyte;
éliminer une pellicule d'oxyde de silicium laissée sur le substrat de silicium (20) après gravure;
former une pellicule de détection en verre (26A; 26B) sur la face du substrat de silicium (20) opposée à la face du substrat pour recouvrir et fermer le trou (24), et
solidariser la surface gravée du substrat de verre (10) et la face du substrat de silicium (20) de telle sorte que le trou (24) soit situé à proximité de l'électrode de référence (12).

11. Procédé selon la revendication 10, dans lequel la pellicule de détection en verre (26A) est formée en fixant une pellicule de verre sur la face du substrat de silicium (20) opposée à la face du substrat.

12. Procédé selon la revendication 10, dans lequel la pellicule de détection en verre (26B) est formée en reliant une couche de verre inférieure (29A) sur la face du substrat de silicium (20) opposée à la face du substrat et ensuite en formant, sur la couche de verre inférieure (29A), une couche de verre supérieure (29B) de verre au sodium-calcium (Na-Ca) ou de verre au lithium (Li) par pulvérisation ou dépôt sous vide.

13. Procédé selon l'une quelconque des revendications 9 à 12, dans lequel le substrat (10) est lié au substrat de silicium (20) par liaison anodique.

14. Procédé selon l'une quelconque des revendications 9 à 13, comportant en outre l'injection d'un électrolyte dans le trou (24) par l'intermédiaire de la gorge (22).
